# EUROPÄISCHE PATENTSCHRIFT

(11) **EP 1 264 995 B1**
(45) Veröffentlichungstag und Bekanntmachung des Hinweises auf die Patenterteilung: **17.03.2004**
(21) Anmeldenummer: 02012345.1
(22) Anmeldetag: 05.06.2002
(51) Int. Cl.: F16B 25/00, F16B 35/04

(54) **Vorrichtung zur Befestigung einer Bildröhre an einem Deckrahmen**
Device for locking a television tube to a set frame
Dispositif pour fixer une tube de télévision au cadre du boitier

(30) Priorität: 05.06.2001 DE 10127167
(43) Veröffentlichungstag der Anmeldung: 11.12.2002
(73) Patentinhaber: EJOT VERBINDUNGSTECHNIK GmbH & Co. KG, 57334 Bad Laasphe (DE)
(72) Erfinder: Humm, Helmut, 90587 Obermichelbach-Rothenberg (DE); König, Gottfried, 57334 Bad Laasphe (DE)
(74) Vertreter: Bardehle, Heinz, Dipl.-Ing.

(56) Entgegenhaltungen:
- GB-A- 2 336 623
- GB-A- 2 344 136

## Beschreibung

Die Erfindung bezieht sich auf eine zur Befestigung einer Bildröhre an einem Deckrahmen anbringbare Vorrichtung mit einem Führungsteil und einem Ausgleichselement, bei der ein an der Bildröhre befestigter, mit einer Bohrung versehener flacher Flansch mit einer Schraube über ein Innengewinde an dem Führungsteil anschraubbar ist, wobei zwischen Führungsteil und Flansch das Ausgleichselement eingesetzt ist, das in einer Lage, die durch die an dem Deckrahmen anliegende Bildröhre bestimmbar ist, gegenüber dem Deckrahmen dadurch fixierbar ist, dass das Ausgleichselement mit dem Führungsteil des Deckrahmens zusammenwirkt, das ein Innenrohr und ein damit koaxiales Außenrohr mit einem dazwischen liegenden Zwischenraum aufweist, der von dem ebenfalls rohrartig ausgebildeten Ausgleichselement im Wesentlichen ausgefüllt ist.

Eine derartige Vorrichtung ist aus der europäischen Patentschrift 302026 B1 bekannt. Mit dieser Vorrichtung soll zweierlei erreicht werden. Zum einen soll eine Relativverdrehung zwischen dem Führungsteil und dem Ausgleichselement verhindert werden, um ein Anziehen der Schraube sicherzustellen, was dadurch geschieht, dass das Ausgleichselement in eine Vielzahl von Formsektoren aufgeteilt ist, von denen jeder in einen entsprechenden Hohlraum im Führungsteil eingeführt ist. Dies führt, wie schon die Figuren der europäischen Patentschrift zeigen, zu einer komplizierten Konstruktion mit einer Vielzahl von ineinandergreifenden Verzweigungen seiner Einzelteile. Zum anderen soll verhindert werden, dass mit dem Ansetzen der Schraube diese nicht zunächst auf das Ausgleichselement drükken kann, da in diesem Falle das Ausgleichselement, dessen unter der Spannung des Federelements zwischen Deckrahmen und Flansch eingenommene Lage für die Halterung der Bildröhre unter Berücksichtigung von Toleranzen verantwortlich ist, aus seiner Lage willkürlich herausgedrückt werden könnte. Diese letzte Forderung ist jedoch beim Gegenstand der europäischen Patentschrift nur dann erfüllt, wenn die Schraube wirklich zentrisch in die Vorrichtung eingesetzt wird und nicht etwa irgendwie schräg, was bei schneller Montage niemals ausgeschlossen werden kann.

Eine der Vorrichtung gemäß der europäischen Patentschrift 0 302 026 B1 ähnliche Vorrichtung ist in der UK-Patentanmeldung GB 2,336,623 A offenbart. Um bei der letzteren Gestaltung ein Verdrehen des Ausgleichselementes zu verhindern, sind das Innenrohr, das Ausgleichselement und das Außenrohr im Querschnitt nach Art eines Sechskants gestaltet. Weiterhin wird zur Sicherung der Lage des Ausgleichselementes gegenüber dem Innenrohr eine Schraube verwendet, die mit einem verringerten Durchmesser zunächst in das Innenrohr eindringt und mit einem dem gegenüber wesentlich vergrößerten Gewindedurchmesser im Bereich neben dem Schraubenkopf auf das Ausgleichselement dort einwirkt, wo dieses aus dem Außenrohr herausragt. Diese Gestaltung hat zur Folge, dass sich beim schnellen Einführen der Schraube das Ausgleichselement etwas verschieben kann, wodurch sich für den Flansch und damit die Bildröhre eine falsche Lage ergibt. Es wird über zwei Gewindeabschnitte mit unterschiedlichem Außendurchmesser der Schraube in Bezug auf das Innenrohr zunächst eine definierte Lage gegeben, von der dann über den Gewindeteil mit dem vergrößerten Außendurchmesser das Ausgleichselement festgehalten wird. Voraussetzung für diese durch zwei unterschiedliche Gewindeteile bewirkte Festlegung der Lage des Ausgleichselementes in Bezug auf das Innenrohr ist die Gestaltung des Ausgleichselementes in Bezug auf Innenrohr und Außenrohr, das eine Verdrehung des Ausgleichselementes verhindert, was durch die vorstehend erwähnte Gestaltung mit Sechseckquerschnitt erzielt wird.

Der Erfindung liegt die Aufgabe zugrunde, eine Vorrichtung der eingangs angegebenen Art zu schaffen, bei der eine Verschiebung des Ausgleichselements beim Einsetzen der Schraube praktisch ausgeschlossen und die gesamte Vorrichtung konstruktiv vereinfacht ausgebildet ist.

Erfindungsgemäß wird das Problem dadurch gelöst, dass das Innenrohr mit mindestens einem Längsschlitz gestaltet ist und das Ausgleichselement über seinen Bereich durch die Schraube, die mit einem über ihren Schaft durchgehenden Gewinde versehen ist, mit ihrem Eindrehen in das dadurch aufgeweitete Innenrohr in Längsrichtung unverschiebbar festgeklemmt ist.

Bei dieser Gestaltung tritt eine Beeinflussung des Ausgleichselements durch die Schraube erst dann ein, wenn die Schraube mit ihrem Eindrehen in das Innenrohr dieses aufweitet und damit sofort das Ausgleichselement am Innenrohr festklemmt. Damit wird ein Verschieben des Ausgleichselements beim Ansetzen und Eindrehen der Schraube vermieden, da das Ausgleichselement sogleich mit dem Eindrehen der Schraube in das Innenrohr festgeklemmt wird. Mit dem Eindrehen der Schraube in das Innenrohr wird also sofort dafür gesorgt, das Ausgleichselement in seiner eingenommenen Lage festzuklemmen, die durch die jeweilige Lage von Deckrahmen zum Flansch bestimmt ist. Die dabei diese Lage bestimmenden Toleranzen werden somit durch die eingenommene Lage des Ausgleichselementes voll berücksichtigt und diese Lage wegen des festgeklemmten Ausgleichselements auch stabil gehalten, so dass sich eine solide Halterung der Bildröhre an ihrem Deckrahmen ergibt.

Um für den Vorgang des Einsetzens einer Bildröhre in einen Deckrahmen dem Ausgleichselement eine Beweglichkeit zu geben, bei der es in der Anlage an dem Flansch verbleibt, ordnet man zweckmäßig dem Ausgleichselement ein Federelement zu, das das Ausgleichselement gegen den Flansch drückt. Wenn dann beim Einsetzen einer Bildröhre zunächst eine gewisse Verkantung an einzelnen Befestigungsvorrichtungen entsteht und diese dann beim endgültigen Einsetzen aufgehoben wird, dann kann unter der Wirkung der Spannung des Federelements das Ausgleichselement dieser Bewegung folgen und bleibt damit ständig in Berührungskontakt mit dem Flansch.

Das Innengewinde kann man zweckmäßig einerseits durch eine selbstfurchende Schraube erzeugen, andererseits ist es aber natürlich auch möglich, das Innengewinde mit Untermaß vorzuformen.

Um eine besondere und zusätzliche Sicherung der axialen Relativlage von Innenrohr bzw. Führungsteil und dem Ausgleichselement zu schaffen, ist der bzw. die Längsschlitze von einem bzw. mehreren Vorsprüngen des Ausgleichselements durchsetzt, der bzw. die bis in den Bereich des Innengewindes reichen und dieses fortsetzen. Damit wird die Schraube nicht nur von dem Innenrohr (als Bestandteil des Führungsteils) gehalten, sondern auch von den Vorsprüngen des Ausgleichselements, so dass die mit dem Innenrohr und den Vorsprüngen in Verbindung stehenden Bereiche des Gewindes der Schraube dafür sorgen, dass diese Bereiche und damit Innenrohr und Vorsprünge in einem durch das Gewinde der Schraube gegebenen definierten Abstand festgehalten werden, unabhängig davon, wie weit die Schraube eingedreht ist.

Um auch dem Ausgleichselement eine gewisse radiale Elastizität zu geben, kann man zweckmäßig das Ausgleichselement mit einem oder mehreren Längsschlitzen versehen. Hierdurch wird ermöglicht, dass sich das Ausgleichselement beim Eindrehen der Schraube zusammen mit dem Innenrohr radial ausdehnt und sich gegen das Außenrohr abstützt und damit gegenüber diesem verklemmt.

Um die Verklemmung zwischen Innenrohr und Ausgleichselement bzw. Ausgleichselement und Außenrohr zu intensivieren, gestaltet man das Innenrohr zweckmäßig so, dass dieses radiale Nasen mit nach außen abnehmendem Querschnitt aufweist, die in entsprechende Ausnehmungen im Ausgleichselement hineinragen. In entsprechender Weise kann dann auch das Ausgleichselement mit radialen Nasen mit nach außen abnehmendem Querschnitt versehen werden, die in entsprechende Ausnehmungen im Außenrohr des Führungsteils hineinragen. Zweckmäßig gestaltet man dann die Nasen so, dass die Nasen des Innenrohrs und die Nasen des Ausgleichselements im wesentlichen in die gleiche radiale Richtung weisen.

Eine weitere Intensivierung der Haltekräfte zwischen Innenrohr, Ausgleichselement und Außenrohr läßt sich dadurch erzielen, dass die sich berührenden Oberflächen von Innenrohr und Ausgleichselement sowie Ausgleichselement und Außenrohr eine eine Relativverschiebung erschwerende Oberflächenstruktur aufweisen. Diese kann in einer Aufrauhung oder Riffelung oder dergleichen bestehen.

In den Figuren sind Ausführungsbeispiele der Erfindung dargestellt. Es zeigen
- Fig. 1: einen Schnitt durch die Vorrichtung mit Bildröhre und Deckrahmen;
- Fig. 2: einen Schnitt längs der Linie II-II aus Fig. 1;
- Fig. 3: eine Vorrichtung entsprechend derjenigen gemäß Fig. 1, jedoch mit einer eine Verschiebung erschwerenden Oberflächenstruktur von Ausgleichselement und Führungsteil;
- Fig. 4: eine Gestaltung entsprechend derjenigen gemäß Fig. 2, bei der das Innenrohr und das Ausgleichselement mit radialen Nasen versehen sind;
- Fig. 5: eine Abwandlung der Vorrichtung gemäß Fig. 1 mit Vorsprüngen des Ausgleichselements, in die das Gewinde der Schraube eingreift;
- Fig. 6: einen Schnitt längs der Linie VII-VII aus Fig. 6.

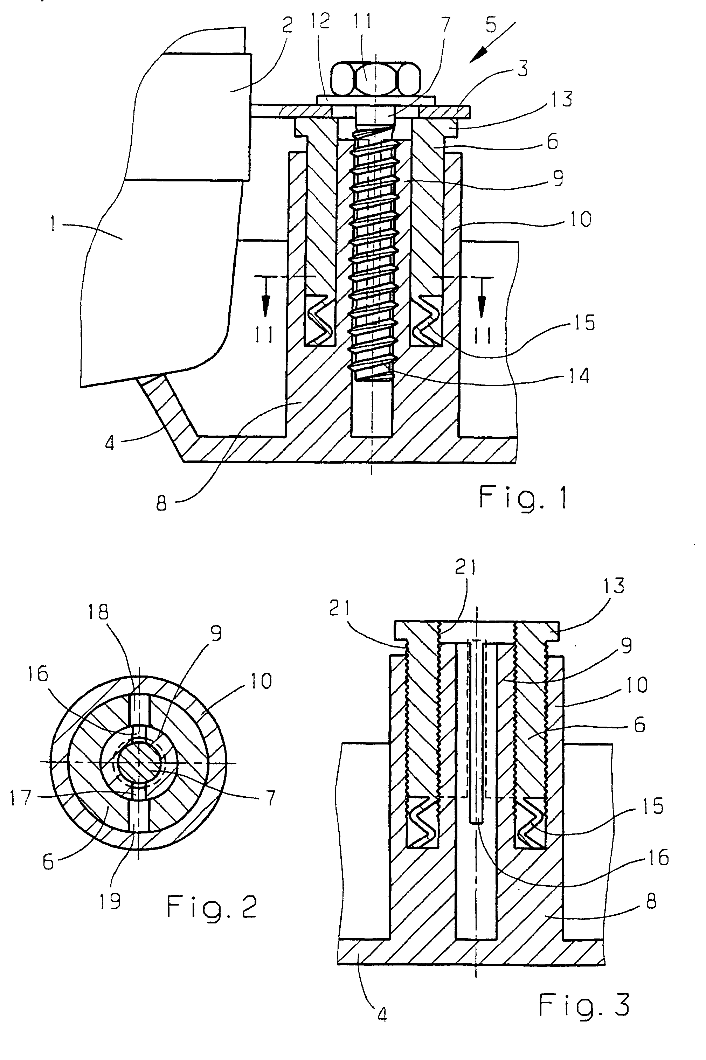

In der Figur 1 ist ein Abschnitt einer Bildröhre 1 für ein Fernsehgerät dargestellt, um die der Blechrahmen 2 gespannt ist. An dem Blechrahmen 2 ist der mit einer Bohrung versehene Flansch 3 befestigt, der von dem Blechrahmen 2 wegragt und zur Befestigung der Bildröhre 1 an dem Deckrahmen 4 dient, in den die Bildröhre 1 eingesetzt ist.

Zur Verbindung des Flansches 3 mit dem Deckrahmen 4 ist die Vorrichtung 5 vorgesehen, die im Wesentlichen aus dem Ausgleichselement 6 und der Schraube 7 besteht. Das Ausgleichselement 6 ist in das Führungsteil 8 eingesetzt, aus dem das Innenrohr 9 und das Außenrohr 10 herausragen. Der durch das Innenrohr 9 und das Außenrohr 10 gebildete, zwischen diesen Rohren liegende Ringraum wird durch das Ausgleichselement 6 im wesentlichen ausgefüllt. In das Innenrohr 9 ist die Schraube 7 eingedreht, die sich mit ihrem Schraubenkopf 11 über die Scheibe 12 an dem Flansch 3 abstützt und diesen gegen einen Bund 13 des Ausgleichselements 6 zieht.

Dieser Gestaltung liegt folgende Funktion zugrunde: Die Bildröhre 1 wird, wie üblich, in den Deckrahmen 4 eingesetzt, wobei sich die Bildröhre 1 gegen den Deckrahmen 4 abstützt. Aufgrund unvermeidlicher Toleranzen zwischen der Abstützstelle der Bildröhre 1 am Deckrahmen 4 und der Lage des Flansches 3 ergibt sich dabei ein mehr oder minder großer Abstand zwischen dem Flansch 3 und den Stirnseiten des Innenrohrs 9 und des Außenrohrs 10, der sich durch das Ausgleichselement 6 in selbsttätiger Anpassung an die jeweilige Lage des Flansches 3 anlegt. Beim Ansetzen der Bildröhre 1 an dem Deckrahmen 4 drückt der Flansch 3 auf das zunächst leicht verschiebbar zwischen dem Innenrohr 9 und dem Außenrohr 10 sitzende Ausgleichselement 6 und schiebt dieses in den Ringraum zwischen den beiden Rohren 9 und 10 hinein, bis die Bildröhre 1 an den Deckrahmen 4 anliegt. In dieser Relativlage wird dann der Flansch 3 dadurch festgehalten, dass mit Erreichen der so angepaßten Lage von Bildröhre 1 und Flansch 3 die Schraube 7 in das Innenrohr 9 eingedreht wird, wobei sich dieses aufgrund eines entsprechenden Durchmessers des Gewindes 14 der Schraube 7 und eines entsprechenden Innendurchmessers des Innenrohrs 9 aufweitet und damit das Ausgleichselement 6 in einem Preßsitz zwischen dem Innenrohr 9 und dem Außenrohr 10 festhält. Bei diesem Eindrehen der Schraube 7 ergibt sich lediglich eine radiale Ausdehnung des Innenrohres 9, ohne dass dabei gleichzeitig eine besondere Axialkraft auf den Flansch 3 ausgeübt wird. Mit Erreichen der Endlage der Schraube 7, nämlich bei Andrücken des Schraubenkopfes 11 an den Flansch 3 ergibt sich dann eine feste Verbindung zwischen Schraube 7, Innenrohr 9, Ausgleichselement 6 und Außenrohr 10 zum Flansch 3, womit ohne Axialspannung die Bildröhre 1 im Deckrahmen 4 festgehalten ist.

Beim Einsetzen der Bildröhre 1 in den Deckrahmen 4 ergibt sich normalerweise eine gewisse Anpaßbewegung, bei der die Bildröhre ggf. in eine leichte Schräglage mit ihrem Flansch 3 zu der Vorrichtung 5 gelangt, aus der sie dann durch die Anpaßbewegung in die endgültige richtige Lage zu bringen ist. Dabei ergibt sich zwangsläufig sowohl ein Druck auf den Bund 13 des Ausgleichselements 6 als auch eine momentane Entlastung des Ausgleichselements 6, das dabei seine Anlage an dem Flansch 3 beizubehalten hat. Das Ausgleichselement 6 muß also einer entsprechenden Bewegung des Flansches 3 von den Stirnseiten des Innenrohrs 9 und des Außenrohrs 6 weg möglichst automatisch folgen. Dies wird durch das Federelement 15 bewerkstelligt, dass bei dem Ausführungsbeispiel gemäß Figur 1 nach Art eines Federbalges gebildet ist, der sich mehr oder minder mit dem Aufbau einer geringen Federspannung zusammendrücken läßt. Die dabei ausgenutzte Federspannung ist gerade so groß, dass das Ausgleichselement 6 ständig in Berührungskontakt mit dem Flansch 3 bleibt, ohne dass dabei auf den Flansch 3 ein die Lage der Bildröhre 1 in dem Deckrahmen 4 tatsächlich beeinflussende Kraft ausgeübt wird.

Bei dem Gewinde 14 der Schraube 7 handelt es sich um selbstfurchendes Gewinde, das beim Eindrehen der Schraube 7 in das Innenrohr 9 sich sein Gewinde selbst furcht, wobei, wie oben bereits dargelegt, das Innenrohr 9 aufgeweitet wird. Dieses Aufweiten wird bei dem dargestellten Ausführungsbeispiel durch die beiden Längsschlitze 16 und 17 wesentlich erleichtert, deren Lage aus Figur 2 hervor geht, die einen Schnitt längst der Linie II-II aus Figur 1 darstellt. Aus Figur 2 ist ersichtlich, dass in dem Innenrohr 9 in radial fluchtender Lage die beiden Längsschlitze 16 und 17 eingebracht sind, die axial von der Stirnseite des Innenrohres bis in den Bereich des Federelements 15 reichen, wie dies durch die gestrichelte Linienführung in Figur 1 angedeutet ist. Aufgrund des Vorhandenseins der beiden Längsschlitze 16 und 17 läßt sich das Innenrohr beim Eindrehen der Schraube 7 in erheblichem Umfang aufweiten und preßt sich dabei gegen das Ausgleichselement 6, das sich wiederum an dem Außenrohr 10 abstützt, so dass nach Eindrehen der Schraube 7 aufgrund der gegebenen Reibungsverhältnisse das Ausgleichselement 6 fest in dem durch Innenrohr 9 und Außenrohr 10 gebildeten Führungselement 8 festgeklemmt ist, womit über den Bund 13 des Ausgleichselements 6 dem Flansch 3 ein stabiles Widerlager gegeben ist. Über das Ausgleichselement 6 stützt sich in der in der Figur 1 dargestellten Lage der Schraube 7 der Flansch 3 an dem Innenrohr 9 und dem Außenrohr 10 ab, wobei durch diese beiden Rohre, die das Führungsteil 8 bilden, eine feste Verbindung zu dem Deckrahmen 4 hergestellt ist, weil der Deckrahmen 4 und das Führungsteil 8 einstückig ausgebildet sind.

Die Funktion der vorstehenden Ausführungsbeispiele beruht auf einer Reibung zwischen den dem Ausgleichselement 6 zugewandeten Oberflächen des Innenrohrs 9 und des Außenrohrs 10 sowie der Innenfläche und der Außenfläche des Ausgleichselements 6. Falls erforderlich kann diese Reibung durch besondere Maßnahmen erhöht werden, wofür in der Figur 3 ein Ausführungsbeispiel dargestellt ist. Es handelt sich dabei um eine besondere Oberflächenstruktur der Innenfläche und der Außenfläche des Ausgleichselements 6, die durch eine Aufrauhung der Oberfläche herbeigeführt ist. Aufgrund dieser Rauhigkeit 21 verkeilt sich gewissermaßen die betreffende Oberfläche des Ausgleichselements 6 in der betreffenden Oberfläche von Innenrohr 9 und Außenrohr 10, womit die Festhaltefunktion zwischen dem Führungsteil 8 und dem Ausgleichselement 6 besonders ausgeprägt gegeben ist.

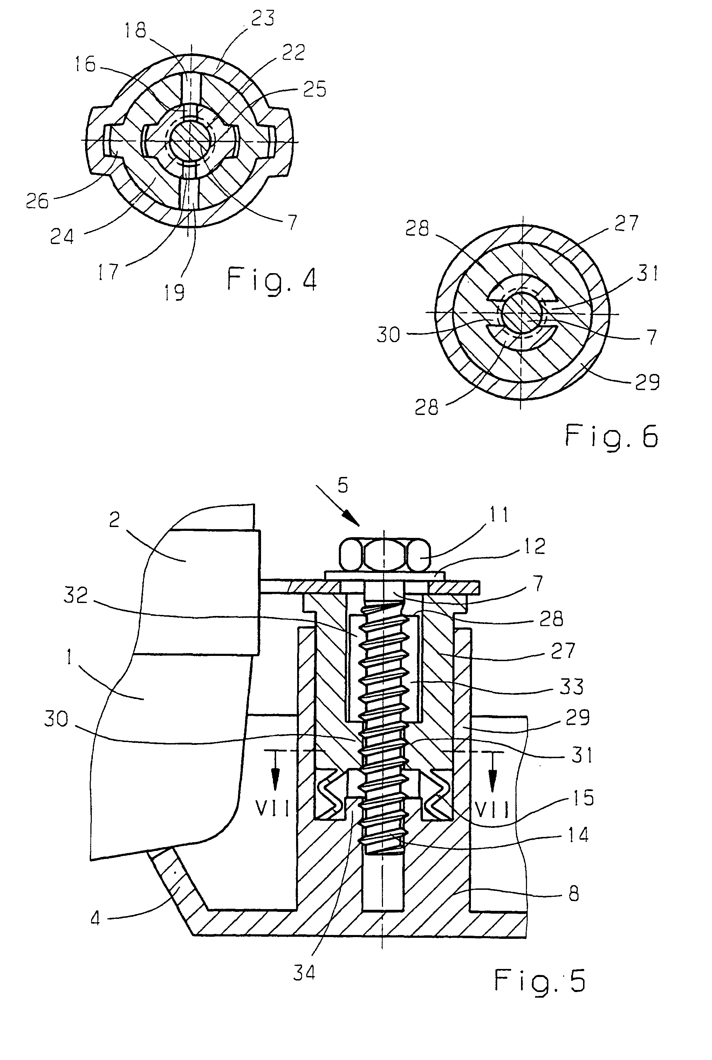

Eine weitere Maßnahme zur Verbesserung der Verklemmung zwischen Führungsteil 8 und Ausgleichselement 6 ist in der Figur 4 dargestellt. Bei diesem Ausführungsbeispiel ist das Innenrohr 22 mit zwei gegenüberliegenden radialen Nasen 25 versehen, die in entsprechende Ausnehmungen des Ausgleichselements 24 hineinragen. Das Ausgleichselement 24 besitzt ebenfalls solche Nasen, nämlich die Nasen 26, die in entsprechende Ausnehmungen im Außenrohr 23 eindringen. Die radialen Nasen 25 und 26 sind dabei mit nach außen abnehmendem Querschnitt ausgebildet und ragen in entsprechend geformte Ausnehmungen ein, womit sich bei Ausdehnung des Innenrohrs 22 bzw. des Ausgleichselements 24 ein besonders gutes Verklemmen der Nasen 25, 26 in den betreffenden Ausnehmungen ergibt. Die jeweils beiden Nasen 25 bw. 26 ragen im wesentlichen in die gleiche radiale Richtung.

Die Vorrichtung gemäß dem in Figur 5 dargestellten Ausführungsbeispiel besitzt gegenüber den Ausführungsbeispielen nach den Figuren 1 und 3 eine zusätzliche Sicherung gegen ein Verschieben des Ausgleichselements gegenüber dem Führungsteil. Diese zusätzliche Sicherung besteht aus den Vorsprüngen 30 und 31, die als Bestandteile des Ausgleichselements 27 durch Längsschlitze 32 und 33 in dem Innenrohr 28 hindurchragen und genauso wie das Innenrohr 28 das Gewinde 14 aufnehmen, das hier von der selbstfurchenden Schraube 7 stammt. Das Gewinde 14 ragt außerdem in den stehengebliebenen Teil 34 des Innenrohrs 28 hinein, so dass sich sowohl in diesem Teil 34 als auch im Bereich der Vorsprünge 30 und 31 Gewindegänge des Gewindes 14 der Schraube 7 verankern. Diese über das Gewinde 14 gegebene axiale Verankerung des Ausgleichselements 27 gegenüber . dem Führungsteil 8 bewirkt eine besonders feste Sicherung des Ausgleichselements 27 an dem Führungsteil 8 und damit an dem Deckrahmen 4. Darüber hinaus sorgt natürlich die durch die Schraube 7 bewirkte Ausdehnung des Innenrohrs 28 dafür, dass sich dieses von innen her gegen das Ausgleichselement 27 andrückt, was auf den gleichen Effekt hinausläuft, wie er im Zusammenhang mit den Figuren 1 und 2 beschrieben ist.

## Patentansprüche

1. Zur Befestigung einer Bildröhre (1) an einem Deckrahmen (4) anbringbare Vorrichtung (5) mit einem Führungsteil (8) und einem Ausgleichselement (6), bei der ein an der Bildröhre (1) befestigter, mit einer Bohrung versehener flacher Flansch (3) mit einer Schraube (7) über ein Innengewinde an dem Führungsteil (8) anschraubbar ist, wobei zwischen Führungsteil (8) und Flansch (3) das Ausgleichselement (6) eingesetzt ist, das in einer Lage, die durch die an dem Deckrahmen (4) anliegende Bildröhre (1) bestimmbar ist, gegenüber dem Deckrahmen (4) dadurch fixierbar ist, dass das Ausgleichselement (6) mit dem Führungsteil (8) des Deckrahmens (4) zusammenwirkt, das ein Innenrohr (9) und ein damit koaxiales Außenrohr (10) mit einem dazwischen liegenden Zwischenraum aufweist, der von dem ebenfalls rohrartig ausgebildeten Ausgleichselement (6) im Wesentlichen ausgefüllt ist, **dadurch gekennzeichnet, dass** das Innenrohr (9) mit mindestens einem Längsschlitz (16, 17) gestaltet ist und das Ausgleichselement (6) über seinen Bereich durch die Schraube (7), die mit einem über ihren Schaft durchgehenden Gewinde (14) versehen ist, mit ihrem Eindrehen in das dadurch aufgeweitete Innenrohr (9) in Längsrichtung unverschiebbar festgeklemmt ist.

2. Vorrichtung nach Anspruch 1, **dadurch gekennzeichnet, dass** dem Ausgleichselement (6) ein Federelement (15) zugeordnet ist, das das Ausgleichselement (6) gegen den Flansch (3) drückt (Fig. 1).

3. Vorrichtung nach Anspruch 1 oder 2, **dadurch gekennzeichnet, dass** das Innengewinde durch eine selbstfurchende Schraube (7) erzeugt ist.

## Claims

1. A device (5) for locking a television tube (1) to a set frame (4), comprising a guiding element (8) and an alignment element (6), where a flat flange (3) patched to the television tube (1) and provided with a bore is screwable to the guiding element (8) via a screw (7) and an internal screw thread, the alignment element (6) being inserted between the guiding element (8) and the flange (3), being fixable in a position that can be determined by the television tube (1) adjacent to the set frame (4), with respect to the set frame (4) by cooperation of the alignment element (6) and the guiding element (8) of the set frame (4), having an inner tube (9) and an outer tube (10) being coaxial to it with a space between them, the space essentially being filled with the also tube-like formed alignment element (6), **characterized in that** the inner tube (9) is designed with at least one longitudinal slit (16, 17) and that the alignment element (6) is clamped non displaceable in a longitudinal direction by screwing in the screw (7) having a continuous threat (14) all over its shaft, in the inner tube (9) that is expended by doing so.

2. The device according to claim 1, **characterized in that** the alignment element (6) is allocated to a spring element (15) pushing the alignment element (6) against the flange (3) (fig. 1).

3. Th device according to claim 1 or 2, **characterized in that** the internal screw thread is made by a self-grooving screw (7).

## Revendications

1. Dispositif (5) pouvant être monté sur un châssis (4) pour la fixation d'un tube cathodique (1), comportant un élément de guidage (8) et un élément de compensation (6), dans le cas duquel une bride plate (3) munie d'un perçage fixée sur le tube cathodique (1) peut être vissée avec une vis (7) sur l'élément de guidage (8) par l'intermédiaire d'un filetage intérieur, l'élément de compensation (6) étant monté entre l'élément de guidage (8) et la bride (3), et pouvant être fixé par rapport au châssis (4) dans une position pouvant être définie par le tube cathodique (1) s'appliquant contre le châssis (4), par le fait que l'élément de compensation (6) agit conjointement avec l'élément de guidage (8) du châssis (4), lequel comporte un tube intérieur (9) et un tube extérieur (10) coaxial à ce dernier, entre lesquels est situé un espace intermédiaire, qui est pour l'essentiel comblé par l'élément de compensation (6) agencé également de façon tubulaire, **caractérisé en ce que** le tube intérieur (9) est agencé avec au moins une fente longitudinale (16, 17), et **en ce que**, par le vissage de la vis (7) munie d'un filetage (14) continu sur sa tige, dans le tube intérieur (9) qui est de ce fait expansé, l'élément de compensation (6) est bloqué sur sa zone de façon à ne pas pouvoir se déplacer dans la direction longitudinale.

2. Dispositif selon la revendication 1, **caractérisé en ce qu'**un élément à ressort (15) est associé à l'élément de compensation (6), lequel applique l'élément de compensation (6) contre la bride (3) (figure 1).

3. Dispositif selon la revendication 1 ou 2, **caractérisé en ce que** le filetage intérieur est engendré par une vis autotaraudeuse (7).
